# EUROPEAN PATENT APPLICATION

(11) **EP 3 375 566 A1**
(43) Date of publication of application: **19.09.2018**
(21) Application number: 17160499.4
(22) Date of filing: 13.03.2017
(51) Int. Cl.: B23Q 11/12, B23Q 11/14

(54) **COOLING SYSTEM OF MACHINE TOOL BODY CASTING**

(71) Applicant: Maxxtron Technology Co., Ltd., Taichung City 432 (TW)
(72) Inventor: CHANG, Cheng-Tsung, 432 Taichung City (TW)
(74) Representative: Viering, Jentschura & Partner mbB Patent- und Rechtsanwälte

(57) **Abstract**

A cooling system of machine tool body casting includes a body casting (10), a cooling device (20), and a fan (30). The body casting (10) is provided with an inner space (11), an inlet end (12), and an outlet end (13). The inlet end (12) and the outlet end (13) are connected with the inner space (11). The cooling device (20) is disposed at the inlet end (12). The fan (30) is disposed on one side of the cooling device (20) for inputting external air, such that the external air is input into the inner space (11) and discharged from the outlet end (13). Therefore, the fan (30) triggers the cold air to flow in the inner space (11) for cooling down the heat of the body casting (10).

## Description

### BACKGROUND OF THE INVENTION

### 1. Field of the Invention:

The present invention relates to cooling systems, and more particularly, to a cooling system of machine tool body casting.

### 2. Description of the Related Art:

A conventional tool machine applies a structure of inner channels for achieving the cooling function. A coolant is injected into the channels by a cooling machine, such that the coolant carries away the heat generated by the tool machine for cooling the tool machine. However, the traditional cooling area covers only the region surrounding the coolant channels, so that the cooling effect upon the tool machine is compromised. Also, the cost of coolant channels arrangement remains high, and the issues of coolant leakage still exist.

In addition, a conventional conditioning system for a manufacturing machine includes air tubes that are disposed between the sheet metal and the body castings, and the air tubes are provided with plural openings including an adjustable electromagnetic valve for controlling the air volume. Therefore, cooling air is delivered for cooling the machine.

However, the cooling air is delivered by use of the air tube, so that the air volume at the distal end of the tube is insufficient. The cooling effect at the distal end of the tube is compromised, and the heat of the machine components is not effectively reduced. Also, plural openings are disposed between the sheet metal and the body casting in the aforementioned patent disclosure. As a result, volume of the cooling air disperses through the openings, hence the cooling effect is further compromised. Furthermore, the structural arrangement of the air tubes is complicated, causing a higher manufacturing cost.

### SUMMARY OF THE INVENTION

For improving the issues above, the present invention discloses a cooling system of machine tool body casting. Cooling air is triggered by a fan to flow through the inner part of the body casting, thereby cooling the heat of the machine tool body castings.

For achieving the aforementioned objectives, an embodiment of the present invention provides a cooling system of machine tool body casting, comprising:
a body casting provided with an inner space, an inlet end, and an outlet end, the inlet end and the outlet end connected with the inner space;
a cooling device disposed at the inlet end; and
a fan disposed on one side of the cooling device for inputting external air, such that the external air is input into the inner space and discharged from the outlet end.

In an embodiment of the present invention, the cooling device and the fan are disposed in the inner space.

In an embodiment of the present invention, the fan faces away from the inlet end and is attached to the cooling device.

In an embodiment of the present invention, the surface of the body casting comprises plural hollow bores.

In an embodiment of the present invention, the cooling device is connected with an inflow tube and an outflow tube. The inflow tube and the outflow tube are further connected with a cooling machine, such that the cooling machine cycles a coolant between the cooling machine and the cooling device.

In an embodiment of the present invention, the body casting is formed in an up-right orientation, wherein the inlet end and the outlet end are transversely disposed on two neighboring sides of the body casting.

In an embodiment of the present invention, the body casting is formed in a transversely lying orientation, wherein the inlet end and the outlet end are axially disposed at two ends of the body casting.

With such configuration, the fan delivers the external air to be cooled down by the cooling device, so that the external air is turned into cold air and flows in the inner space, whereby the cold air cools down the heat of the machine tool body casting. Also, compared to the prior art, no additional tubes are to be installed. Therefore, the overall structure is simplified and flexible for manufacturing and installation process.

### BRIEF DESCRIPTION OF THE DRAWINGS

**Fig. 1** is a schematic view illustrating the cooling system of machine tool body casting operated on an up-right oriented body casting.
**Fig. 2** is a schematic view of **Fig. 1** taken from another point of view.
**Fig. 3** is a schematic view illustrating the structure of the cooling system in accordance with an embodiment of the present invention.
**Fig. 4** is a schematic view illustrating the cooling system operated on a transversely lying casting.
**Fig. 5** is a schematic view illustrating the cooling system operated on another transversely lying casting.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

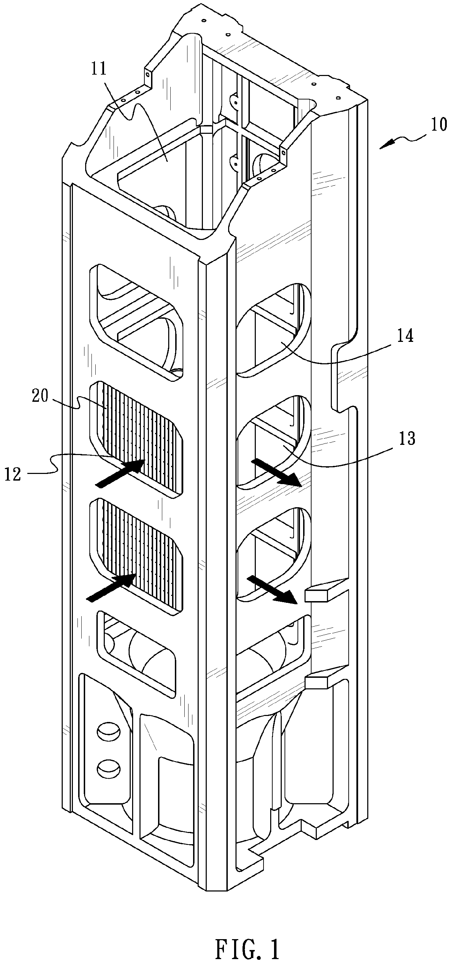

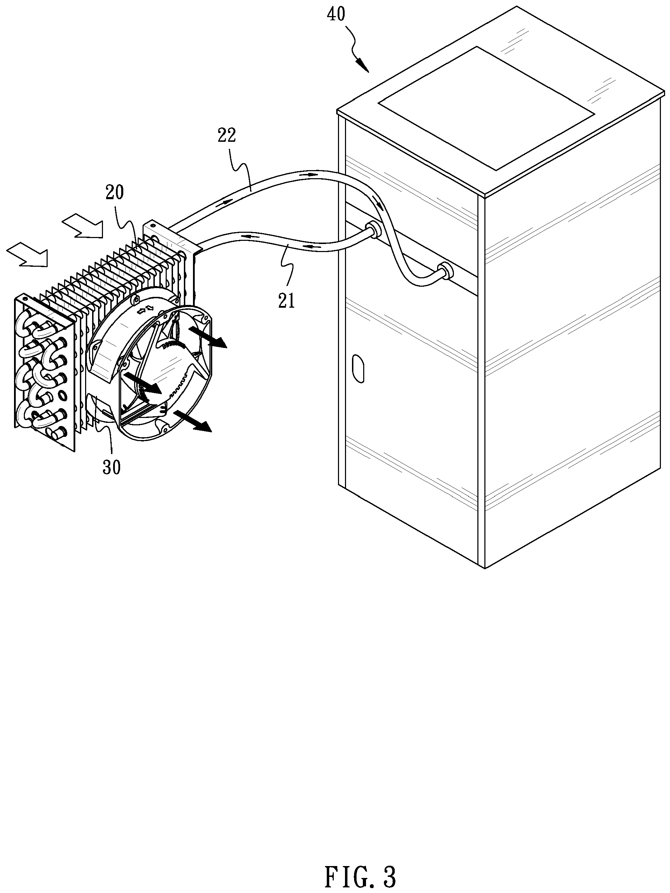

Referring to **Fig. 1** to **Fig. 5**, an embodiment of the present invention provides a cooling system of machine tool body casting, comprising a body casting **10** and a cooling system.

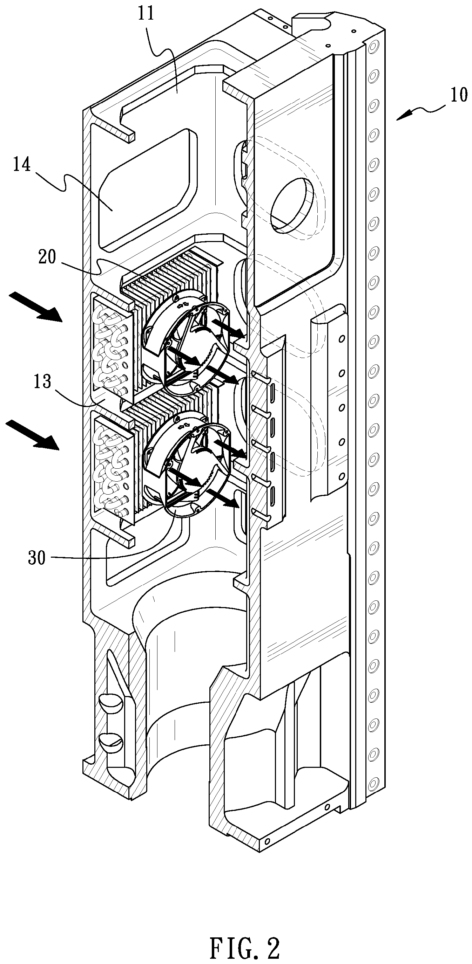

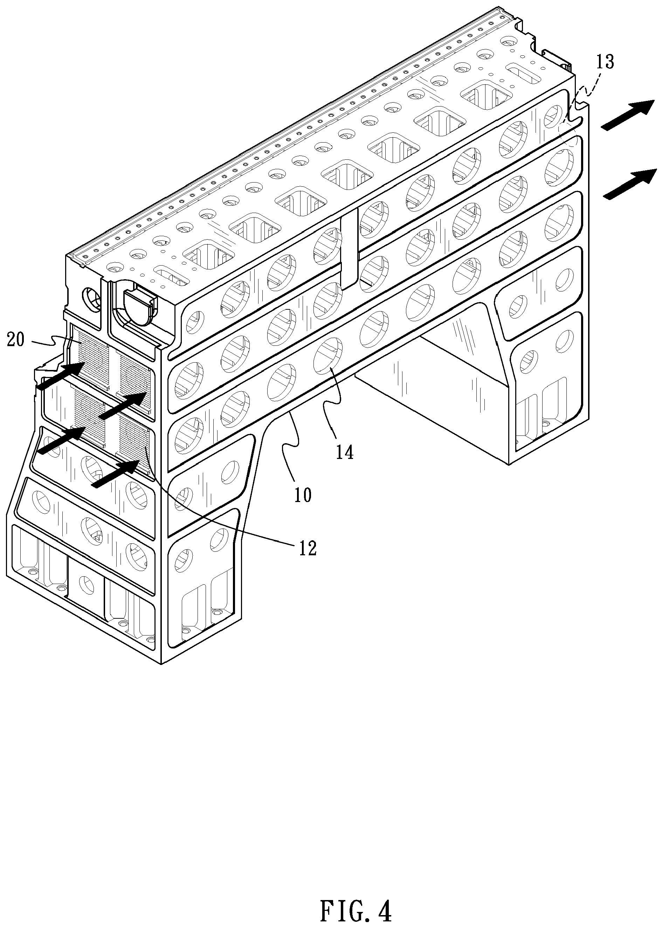

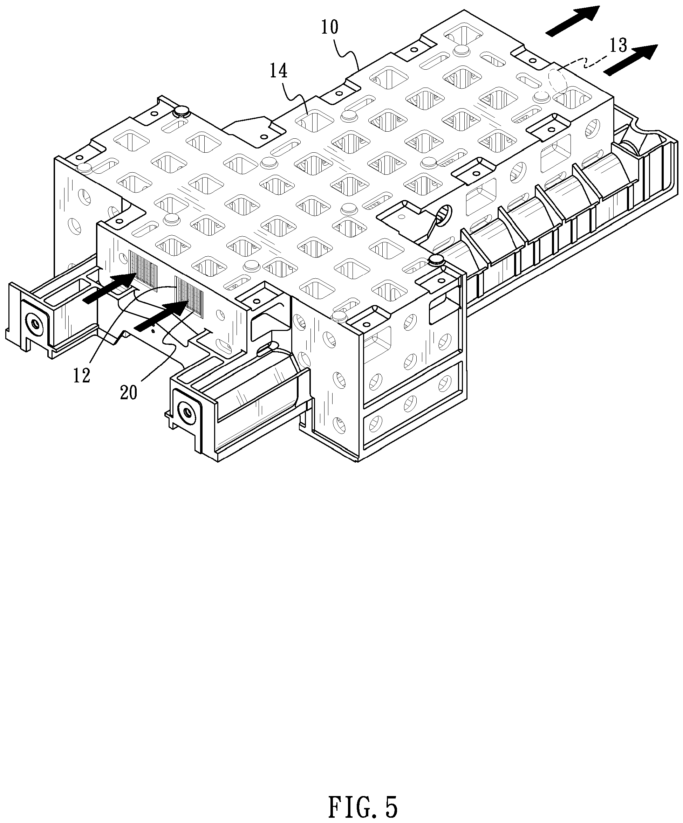

The body casting **10** is a part of the machine tool. The body casting **10** is allowed to be formed in an up-right orientation referring to **Fig. 1** and **Fig. 2** or in a transversely lying orientation referring to **Fig. 4** and **Fig. 5**. The body casting **10** is provided with an inner space **11** and an inlet end **12** and an outlet end **13** that are connected with the inner space **11**. As shown in **Fig. 2**, the inlet end **12** and the outlet end **13** are transversely disposed on two sides of the body casting **10**. Alternately in another embodiment as shown in **Fig. 4** and **Fig.** 5, the inlet end **12** and the outlet end **13** are axially disposed at two ends of the body casting **10**. The surface of the body casting **10** is provided with plural hollow bores **14** that are connected with the inner space **11**, the inlet end **12**, and the outlet end **13**. The hollow bores **14** are able to be formed in a circular shape or non-circular shape, and the hollow bores **14** facilitate the air flowing.

The cooling system includes a cooling device **20**, a fan **30**, and a cooling machine **40**. The cooling device **20** is disposed at the inlet end **12**. In an embodiment of the present invention, the cooling device **20** and the fan **30** are both disposed in the inner space **11** by use of the environment provided by the body casting **10**, such that the cooling device **20** and the fan **30** are not exposed from the body casting **10**. In such configuration, the amount of the cooling device **20** and the fan **30** in the cooling system are allowed to be varied depending on the arrangement of the heat source of the machine tool for facilitating the heat cooling process.

The fan **30** is disposed on one side of the cooling device **20** and faces away from the inlet end **12**. In an embodiment of the present invention, the fan **30** is attached to the cooling device **20**. By use of the fan **30**, external air is input into the inner space **11** by the cooling device **20** and discharged from the outlet **13**.

Furthermore, the cooling device **20** is connected with an inflow tube **21** and an outflow tube **22**, wherein the inflow tube **21** and the outflow tube **22** are connected with the cooling machine **40**, such that the cooling machine **40** cycles a coolant cycles between the cooling machine **40** and the cooling device **20**. In an embodiment of the present invention, the cooling machine **40** in such configuration is originally possessed by the machine tool instead of being additionally provided, such that the originally established device configuration is efficiently exploited.

With the foregoing configuration, the coolant flows through the cooling device **20** to cool down the temperature of the cooling device **20**; next, the fan **30** delivers the external air to be cooled down by the cooling device **20**, such that the external air is turned into cold air which flows in the inner space **11**(or being input or discharged through the hollow bores **14**, as shown by **Fig.2**), wherein the inner space **11** acts like channels to facilitate the cold air cooling down the temperature of the body casting **10**. Therefore, the heat generating portions of the machine tool are cooled down, preventing the castings from being structurally deformed due to the heat and imposing negative effects upon the manufacturing accuracy.

In addition, a temperature sensor is allowed to be installed inside the body casting **10** provided by the embodiment of the present invention for sensing the temperatures of different portions of the body casting **10**. With the air flow volume controlled by the fan **30**, the heat cooling efficiency upon different areas is allowed to be increased or decreased.

To sum up, the cooling system of machine tool body casting provided by the embodiments of the present invention is able to be applied in a body casting **10** formed in, for example but not limited to, an up-right orientation or a transversely lying orientation, wherein the overall cooling system is operable on the head portion, seat portion, or pillar portion of the machine tool. Compared to prior arts, the inner space **11** of the body casting **10** is applied as channels without other additional tubes, simplifying the overall structure and enhancing the flexibility of installation thereof. Further, regarding the prior arts, the cold air easily flows through between the body castings and the sheet metal, such that the cold air disperses to lower the heat cooling efficiency. In contrast, in the embodiments provided by the present invention, the fan **30** controls the air flow volume, such that the cold air flows in the inner space **11**, efficiently lowering the temperature of the body castings, preventing the manufacturing accuracy from being affected, and enhancing the cooling efficiency. Although particular embodiments of the invention have been described in detail for purposes of illustration, various modifications and enhancements may be made without departing from the spirit and scope of the invention. Accordingly, the invention is not to be limited except as by the appended claims.

## Claims

1. A cooling system of machine tool body casting, comprising:
a body casting (10) provided with an inner space (11), an inlet end (12), and an outlet end (13), the inlet end (12) and the outlet end (13) connected with the inner space (11);
a cooling device (20) disposed at the inlet end (12); and
a fan (30) disposed on one side of the cooling device (20) for inputting external air, such that the external air is input into the inner space (11) and discharged from the outlet end (13).

2. The cooling system of claim 1, wherein the cooling device (20) and the fan (30) are disposed in the inner space (11).

3. The cooling system of claim 2, wherein the fan (30) is attached to the cooling device (20) and faces away from the inlet end (12).

4. The cooling system of claim 1, wherein a surface of the body casting (10) is provided with plural hollow bores (14).

5. The cooling system of claim 1, wherein the cooling device (20) is connected with an inflow tube (21) and an outflow tube (22); the inflow tube (21) and the outflow tube (22) connected with a cooling machine (40), such that the cooling machine (40) cycles a coolant between the cooling machine (40) and the cooling device (20).

6. The cooling system of claim 1, wherein the body casting (10) is formed in an up-right orientation, wherein the inlet end (12) and the outlet end (13) are transversely disposed on two neighboring sides of the body casting (10).

7. The cooling system of claim 1, wherein the body casting (10) is formed in a transversely lying orientation, wherein the inlet end (12) and the outlet end (13) are axially disposed at two ends of the body casting (10).
